(19) Europäisches Patentamt
European Patent Office
Office européen des brevets

(11) Veröffentlichungsnummer : **0 041 477**
**B1**

(12) # EUROPÄISCHE PATENTSCHRIFT

(45) Veröffentlichungstag der Patentschrift : **20.02.85**

(51) Int. Cl.[4] : **C 08 L 67/02**, C 09 B 1/514

(21) Anmeldenummer : **81810197.4**

(22) Anmeldetag : **25.05.81**

(54) **Verfahren zum Färben linearer Polyester in der Schmelze.**

(30) Priorität : **29.05.80 CH 4186/80**

(43) Veröffentlichungstag der Anmeldung : **09.12.81 Patentblatt 81/49**

(45) Bekanntmachung des Hinweises auf die Patenterteilung : **20.02.85 Patentblatt 85/08**

(84) Benannte Vertragsstaaten : **CH DE FR GB IT LI**

(56) Entgegenhaltungen :
**FR-A- 2 219 963**
**FR-E- 92 461**
**GB-A- 1 067 645**

(73) Patentinhaber : **CIBA-GEIGY AG**
**Postfach**
**CH-4002 Basel (CH)**

(72) Erfinder : **Umsonst, Gerhard, Dr.**
**Eggrainweg 27**
**CH-4402 Frenkendorf (CH)**
Erfinder : **Kölliker, Hans Peter, Dr.**
**Concordiastrasse 39**
**CH-4142 Münchenstein (CH)**
Erfinder : **Jost, Max**
**Rebgartenweg 20**
**CH-4104 Oberwil (CH)**

EP 0 041 477 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es wurde gefunden, dass sich 1-Hydroxy-4-phenylaminoanthrachinone der Formel

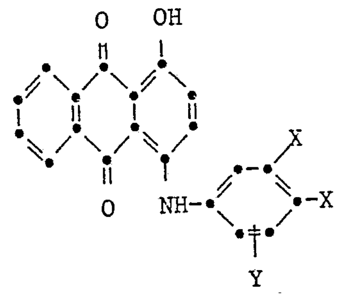

(I)

worin ein X ein H-Atom und das andere X eine Alkyl- oder Chloralkylsulfonyloxygruppe vorzugsweise eine solche mit 1-4 C und Y ein H- oder Halogen-Atom oder eine Alkylgruppe bedeuten, zum Färben linearer Polyester in der Schmelze hervorragend eignen.

Steht Y für ein Halogenatom, dann vorzugsweise für ein Chloratom, bedeutet es eine Alkylgruppe, dann vorzugsweise die Methylgruppe.

Bevorzugt sind jene Farbstoffe der Formel (I), worin ein X eine Methylsulfonylgruppe und Y ein H-Atom bedeutet.

Die Farbstoffe der Formel (I) stellen zum Teil bekannte Verbindungen dar und können nachdem in der DE-PS 1.644.536 beschriebenen Verfahren erhalten werden.

Anstelle einheitlicher Farbstoffe können auch Mischungen verschiedener Farbstoffe der Formel (I) oder Mischungen von einem oder mehreren Farbstoffen der Formel (I) mit anderen zum Färben linearer Polyester in der Schmelze geeigneten Farbstoffen verwendet werden.

Als lineare Polyester seien insbesondere jene erwähnt, die durch Polykondensation von Terephthalsäure oder deren Estern mit Glykolen der Formel $HO—(CH_2)_n—OH$, worin n die Zahl 2-10 bedeutet, oder mit 1,4-Di(hydroxymethyl)-cyclohexan oder durch Polykondensation von Glykoläthern von Hydroxybenzoesäuren, beispielsweise p-(β-Hydroxyäthoxy)-benzoesäure erhalten werden. Der Begriff lineare Polyester umfasst auch Copolyester, die durch teilweisen Ersatz der Terephthalsäure durch eine andere Dicarbonsäure oder eine Hydroxycarbonsäure und/oder durch teilweisen Ersatz des Glykols durch ein anderes Diol erhalten werden.

Von besonderem Interesse sind jedoch die Polyäthylenenterephthalate.

Die Färbung erfolgt nach den üblichen Verfahren, beispielsweise durch Mischen der Farbstoffe mit dem Kunststoffgranulat oder -pulver und Extrudieren der Mischung zu Fasern, Folien oder Granulaten. Letztere können dann im Spritzgussverfahren zu Gegenständen verformt werden.

Die erhaltenen Färbungen zeichnen sich durch gute Licht-, Wasch-, Trockenreinigung-, Ueberfärbe-, Thermofixier-, Ausblut- und Chloritechtheit, sowie durch gute Faserviscositätswerte, gute Reibechtheiten nach der Thermofixierung, reine Farbtöne und gute Farbstärke aus.

In den nachfolgenden Beispielen bedeuten die Teile, sofern nichts anderes angegeben, Gewichtsteile, die Prozente Gewichtsprozente und die Temperaturen sind in Celsiusgraden angegeben.

Beispiel 1

Ein zur Faserherstellung geeignetes unmattiertes Polyäthylenterephthalat-Granulat wird in einem verschliessbaren Gefäss zusammen mit 1-Hydroxy-4-p-methylsulfonyloxy-phenylamino-anthrachinon, hergestellt nach Beispiel 4 der DE-PS 1.644.536, auf einer Schüttelmaschine 15 Minuten geschüttelt. Die gleichmässig gefärbten Granulatkörner werden auf einer Schmelzspinnanlage (285° ± 3°, Verweilzeit in der Spinnmaschine ca. 5 Minuten) zu Fäden versponnen, die auf einer Streckwirnanlage verstreckt und aufgespult werden. Man erhält infolge der Löslichkeit des Farbstoffs in Polyäthylenterephthalat eine kräftige blauviolette Färbung, die sich durch Nuancenreinheit, gute Lichtechtheit, vorzügliche Wasch-, Trockenreinigungs-, Ueberfärbe-, Sublimations- und Reibechtheit nach Thermofixierung auszeichnet.

Die Hitzbeständigkeit des Farbstoffs und das gute Schmelzfiltrationsverhalten erlauben ein problemloses Fahren der Spinnanlage.

Beispiel 2

1 000 Teile Polyäthylenterephthalat-Granulat, 10 Teile Titanoxid (Kronos RN 40) und 1 Teil des in Beispiel 1 verwendeten fein verteilten Farbstoffs werden in einem verschlossenen Gefäss auf dem Rollbock vermischt. Das eingefärbte Granulat wird bei ca. 260° in Strängen von 2 mm extrudiert und wieder granuliert. Das erhaltene Granulat wird im Ankerschneckenspritzgussautomat bei 270 bis 280° zu Formlingen verspritzt. Man erhält einen blauviolett gefärbten Formling von guter Lichtechtheit.

Beispiel 3-10

In der nachfolgenden Tabelle sind weitere Farbstoffe der Formel

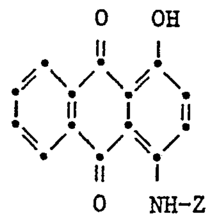

aufgeführt, worin Z die in Kolonne II angegebene Bedeutung hat. Sie ergeben nach dem im Beispiel 1 erwähnten Färbeverfahren Polyesterfasern mit der in Kolonne III angegebenen Nuance.

| Beispiel | Z | Nuance |
|---|---|---|
| 3 | 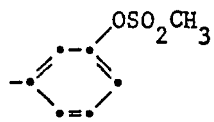 | violett |
| 4 | 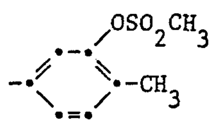 | " |
| 5 | 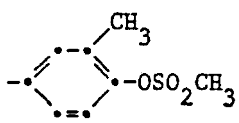 | " |
| 6 | 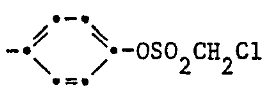 | blauviolett |

**Ansprüche**

1. Verfahren zum Färben linearer Polyester in der Schmelze, dadurch gekennzeichnet, dass man als Farbstoffe 1-Hydroxy-4-phenylaminoanthrachinone der Formel I

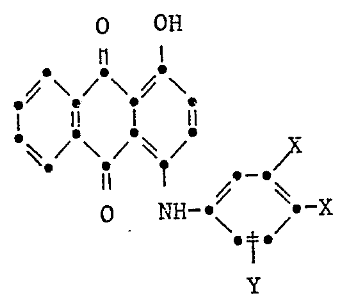

(I)

verwendet, worin ein X ein H-Atom und das andere X eine Alkyl- oder Chloralkylsulfonyloxygruppe und Y ein H- oder Halogen-Atom, oder eine Alkylgruppe bedeuten.

2. Verfahren gemäss Anspruch 1, dadurch gekennzeichnet, dass man als Farbstoff eine Verbindung der Formel (I) verwendet, worin ein X eine Alkyl- oder Chloralkylsulfonyloxygruppe mit 1-4 C und das andere ein H-Atom und Y H oder Methyl bedeutet.

3. Verfahren gemäss Anspruch 2, dadurch gekennzeichnet, dass die Alkylsulfonyloxygruppe die Methylsulfonyloxygruppe bedeutet.

4. Verfahren gemäss Anspruch 1, dadurch gekennzeichnet, dass man als Farbstoff eine Verbindung der Formel

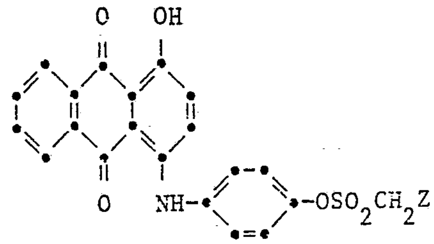

verwendet, worin Z H oder Chlor bedeutet.

5. In der Schmelze gefärbte lineare Polyester enthaltend einen Farbstoff gemäss Anspruch 1.

**Claims**

1. A process for colouring linear polyesters in the melt, which process comprises using, as colorant, a 1-hydroxy-4-phenylaminoanthraquinone of the formula

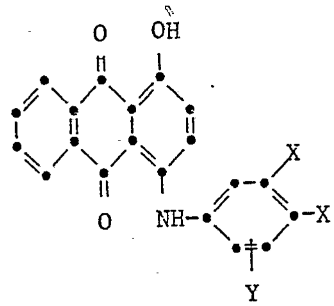

(I)

wherein one X is a hydrogen atom and the other is an alkylsulfonyloxy or chloroalkylsulfonyloxy group and Y is a hydrogen or halogen atom or an alkyl group.

2. A process according to claim 1, wherein the colorant is a compound of the formula I, wherein one X is an alkylsulfonyloxy or chloroalkylsulfonyloxy group of 1 to 4 carbon atoms and the other is a hydrogen atom, and Y is hydrogen or methyl.

3. A process according to claim 2, wherein the alkylsulfonyloxy group is the methylsulfonyloxy group.

4. A process according to claim 1, wherein the colorant is a compound of the formula

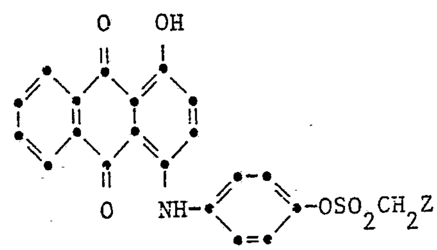

wherein Z is hydrogen or chlorine.

5. A melt colored linear polyester which contains a colorant according to claim 1.

**Revendications**

1. Procédé pour teindre des polyesters linéaires à l'état fondu, procédé caractérisé en ce qu'on utilise, comme colorants, des hydroxy-1 phénylamino-4 anthraquinones répondant à la formule I

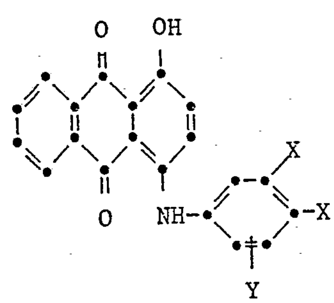

(I)

dans laquelle l'un des deux X représente un atome d'hydrogène et l'autre un radical alkylsulfonyloxy ou chloralkylsulfonyloxy, et Y représente un atome d'hydrogène ou d'halogène ou un radical alkyle.

2. Procédé selon la revendication 1, caractérisé en ce qu'on utilise, comme colorant, un composé de formule I dans lequel l'un des symboles X représente un radical alkylsulfonyloxy ou chloralkylsulfonyloxy contenant de 1 à 4 atomes de carbone et l'autre un atome d'hydrogène, et Y représente un atome d'hydrogène ou un radical méthyle.

3. Procédé selon la revendication 2, caractérisé en ce que le radical alkylsulfonyloxy est un radical méthylsulfonyloxy.

4. Procédé selon la revendication 1, caractérisé en ce qu'on utilise, comme colorant, un composé répondant à la formule suivante

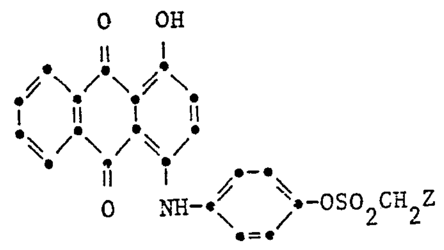

dans laquelle Z représente un atome d'hydrogène ou de chlore.

5. Polyesters linéaires teints à l'état fondu, qui contiennent un colorant selon la revendication 1.